(19) Europäisches Patentamt
European Patent Office
Office européen des brevets

(11) EP 4 402 293 B1

(12) **EUROPEAN PATENT SPECIFICATION**

(45) Date of publication and mention of the grant of the patent:
**17.09.2025 Bulletin 2025/38**

(21) Application number: **22729049.1**

(22) Date of filing: **06.05.2022**

(51) International Patent Classification (IPC):
***C21B 13/00*** *(2006.01)* ***C01B 3/04*** *(2006.01)*
***C21B 13/02*** *(2006.01)*

(52) Cooperative Patent Classification (CPC):
**C21B 13/0073; C01B 3/047; C21B 13/0033; C21B 13/029;** C21B 2100/22; C21B 2100/26; C21B 2100/282; C21B 2100/44; C21B 2100/64; Y02P 10/122; Y02P 10/134

(86) International application number:
**PCT/EP2022/062354**

(87) International publication number:
**WO 2023/036475 (16.03.2023 Gazette 2023/11)**

(54) **METHOD FOR PRODUCING DIRECT REDUCED IRON FOR AN IRON AND STEELMAKING PLANT**

VERFAHREN ZUR HERSTELLUNG VON DIREKT REDUZIERTEM EISEN FÜR EINE EISEN- UND STAHLHERSTELLUNGSANLAGE

PROCÉDÉ DE PRODUCTION DE FER RÉDUIT DIRECT POUR UNE INSTALLATION SIDÉRURGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2021 EP 21196359**

(43) Date of publication of application:
**24.07.2024 Bulletin 2024/30**

(73) Proprietor: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
- **WURZEL, Thomas**
  **60439 Frankfurt am Main (DE)**
- **GRANT, Michaël**
  **60439 Frankfurt am Main (DE)**

(74) Representative: **Air Liquide**
**L'Air Liquide S.A.**
**Direction de la Propriété Intellectuelle**
**75, Quai d'Orsay**
**75321 Paris Cedex 07 (FR)**

(56) References cited:
**CN-A- 112 813 219**
**JP-A- 2000 178 625**
**JP-A- 2013 216 929**
**US-A1- 2002 050 097**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 402 293 B1

## Description

The present invention relates to the production of iron by direct reduction.

Processes that produce iron by reduction of iron oxide in iron ore below the melting point of the iron produced are known as direct-reduction processes. The product thereby obtained is known as direct-reduced iron or DRI. Due to its structure with a very high specific surface area, direct-reduced iron is also referred to as sponge iron.

In practice, DRI is often compacted into denser briquettes referred to in the art as hot briquetted iron or HBI. Indeed, the high specific surface area of uncompacted DRI makes it susceptible to spontaneous combustion and therefore dangerous to transport when it reacts with water. Passivation is at least in part achieved by briquetting the DRI to a much denser briquet with a much lower specific surface area.

The present invention relates more specifically to direct-reduction processes whereby reducing gas is produced externally from the iron-reduction reactor or furnace.

Known examples of such direct-reduction processes are the Wiberg-Soderfors process, the Midrex process, the HYL ZR process, HYL III process, the Armco process, the NSC process, the Purofer process, the HYL I and the HYL II processes, the FIOR process and the HIB process.

In the majority of these known direct-reduction processes, natural gas is reformed in a catalyst bed with steam and/or gaseous reduction products evacuated from the iron-reduction reactor to produce a reducing gas which is supplied to the iron-reduction reactor where it reacts with the iron oxides in the iron ore to generate reduced metallic iron. Partial oxidation processes which gasify liquid hydrocarbons, heavy residuals or coal have also been proposed for the production of the reducing gas.

In both cases, a reducing gas containing CO and $H_2$ is obtained.

Direct-reduction processes have thus far been of particular interest in regions which have access to suitable iron ores and inexpensive natural gas, non-coking coals and/or renewable energy sources, such as hydroelectric power. Patent documents JP 2000 178625 A, JP 2013 216929 A and CN 112 813 219 A further disclose direct-reduction processes.

It is expected that non-coal based direct-reduction processes will gain in importance as the drive to reduce $CO_2$-emissions in the iron- and steel-industry gains momentum.

However, there remains a need to reduce the $CO_2$ emissions of DRI production or, more generally, of DRI production and subsequent melting in an Electric Arc Furnace (EAF) for steel production.

It is an aim of the present invention to provide such a direct-reduction process and corresponding steel-production process with reduced $CO_2$ emissions.

Thereto, the present invention proposes a new direct iron-ore reduction process in appended claims 1-15.

According to said process, a gas feed is supplied to a gas reformer. In the gas reformer, said gas feed is reformed so as to obtain a hydrogen-containing reducing gas which is evacuated from the gas reformer.

Iron ore is supplied to a direct-reduction reactor. At least part of the reducing gas is also supplied to the direct-reduction reactor. Inside said direct-reduction reactor, the iron ore is subjected to reduction of the iron oxides contained within by reaction with the reducing gas. The direct-reduced iron thus obtained is evacuated from the direct-reduction reactor.

According to the present invention, the gas feed, which is supplied to the gas reformer, contains $NH_3$. In the gas reformer, the $NH_3$ in the gas feed undergoes the following dissociation reaction

$$2NH_3 \rightarrow N_2 + 3H_2 \qquad (1).$$

A hydrogen-containing reducing gas is thus obtained.

Said hydrogen-containing reducing gas is evacuated from the gas reformer and at least part of said hydrogen-containing reducing gas is supplied to the direct-reduction reactor.

In the direct-reduction reactor, hydrogen present in the reducing gas acts as a reducing agent for the reduction to metallic iron of the iron oxides in the iron ore by direct reduction.

The nitrogen in the reducing gas acts as a ballast gas and does not take part in the direct reduction. Inside the direct reduction reactor, the gas composition is reducing in nature and therefore is not conducive to NOx formation, NOx being an environmentally highly undesirable pollutant.

The ammonia supplied to the gas reformer may be of any origin. According to a preferred embodiment, the ammonia is produced using hydrogen with low-carbon footprint and/or is produced using renewable energy sources. The ammonia is thus advantageously produced using blue or, more preferably, green hydrogen.

Replacing the currently used reducing agents in the direct-reduction reactor with 100% green hydrogen, if possible, could potentially lower $CO_2$ emissions by the DRI/ EAF route by from 63% to 95% with respect to the traditional blast furnace/BOF route.

However, the availability of green hydrogen depends on regional resources of sustainable energy, whether it is

hydroelectric power, wind power, solar power, tidal power and/or even arguably nuclear power.

It would be desirable to extend the ecological benefits of using green hydrogen in steelmaking to other regions with less sustainable energy sources.

In accordance with the present invention, this may be achieved in that green hydrogen is used to produce ammonia and in that said hydrogen is recovered from the ammonia for use as a reducing agent in a direct-reduction reactor, as described above.

As ammonia can be more readily transported than hydrogen, the present invention enables a more widespread cost-effective use of green hydrogen in iron- and steelmaking.

The same advantages are obtained, but to a lesser extent, when blue hydrogen is used to produce the ammonia.

The hydrogen obtained by ammonia dissociation and used as a reducing agent in the direct-reduction reactor can partially or completely replace the use of CO and/or hydrocarbon-based hydrogen or other high-carbon-footprint hydrogen as reducing agents in the production of DRI.

According to a preferred embodiment, the direct-reduction reactor is a continuous direct-reduction reactor.

The gas reformer is advantageously a catalytic gas reformer, in particular a gas reformer with a catalyst containing, for example, nickel or a nickel alloy.

The gas feed to the gas reformer may comprise at least one hydrocarbon in addition to the $NH_3$. The gas feed may, in particular, comprise a hydrocarbon selected from the group consisting of gaseous hydrocarbons, such as methane, ethane, propane, butane, pentane, or a combination of two or more of said hydrocarbons, for example, natural gas.

When such a hydrocarbon-containing gas feed is reformed in the gas reformer, the obtained reducing gas further contains CO, which, in the direct-reduction reactor, acts as a further reducing agent for the reduction to metallic iron of the iron oxides in the iron ore by direct reduction.

The gas feed to the gas reformer may also include steam and/or $CO_2$.

The gas feed to the gas reformer may, for example, contain $CO_2$ when gas feed to the gas reformer comprises $CO_2$-containing flue gas from the direct-reduction reactor or a $CO_2$-containing fraction thereof.

The reducing gas is typically evacuated from the gas reformer at a temperature above ambient temperature, for example, 700 to 900°C. According to a useful embodiment, at least part of the evacuated reducing gas to be supplied to the direct-reduction reactor may be further heated before being introduced to the direct-reduction reactor. For heating the gas reformer and/or for heating the evacuated reducing gas upstream of the direct-reduction reactor, use is preferably made of waste heat available on-site.

The reducing gas may, in particular, advantageously be supplied to the direct-reduction reactor at a temperature between 600°C and 1100°C, preferably between 750°C and 1100°C and more preferably between 950°C and 1050°C.

Flue gas from the direct-reduction reactor, also referred to as "top gas", or a fraction thereof may also be used as fuel for heating the gas reformer. Thus, according to a specific embodiment, one fraction of the flue gas of the direct-reduction reactor is used as fuel for heating the gas reformer and another fraction of said flue gas is added to the gas feed of the gas reformer. Other fuels, including, for example, undissociated ammonia may be used as fuel for heating the gas reformer.

The direct-reduction reactor may be a shaft furnace. Examples of shaft furnaces suitable for use in the present invention include moving-bed shaft furnaces and fluidized-bed shaft furnaces. Countercurrent moving-bed shaft furnaces, in which the gas phase flows in countercurrent with the solid charge of iron ore and DRI are particularly useful examples of such moving-bed shaft furnaces.

The direct-reduced iron produced in and evacuated from the reactor may be briquetted so as to obtain HBI.

The direct-reduced iron produced in and evacuated from the reactor may be used to produce steel, optionally after having been briquetted into HBI.

The present invention thus also covers a process for the production of steel, whereby direct-reduced iron is produced by means of the direct iron-ore reduction process according to the present invention, optionally briquetted into HBI, and steel is produced from said direct-reduced iron, for example in an electric arc furnace.

The present invention relates to a method or process of producing direct reduced iron (DRI) in a direct-reduction reactor, also herein referred to as DRI reactor, preferably a continuously operated DRI reactor, with low/reduced $CO_2$ emissions, whereby hydrogen ($H_2$), optionally in combination with carbon monoxide (CO), acts as reducing agent(s) for the reduction of iron oxides contained in iron ore. The iron ore may, for example, be in the form of iron ore lumps and/or iron ore pellets or mixtures thereof (henceforth indiscriminately referred to as "iron ore"). At least one part of the hydrogen used as a reducing agent is produced by the dissociation of ammonia ($NH_3$) in a gas reformer.

The gas reformer may be a non-catalytic thermal gas reformer or a catalytic gas reformer. Catalytic gas reformers may, for example, contain nickel or a nickel alloy by way of catalyst.

The gas feed to the gas reformer may contain ammonia in combination with gaseous hydrocarbons (such as natural gas), with $H_2$ and/or with CO and/or with $CO_2$ and/or with $H_2O$.

Reactions:

$$(a)\ CH_4 + H_2O \leftrightarrows CO + 3H_2$$

$$(b)\ CH_4 \leftrightarrows C_{(s)} + 2H_2$$

$$(c)\ CO_2 + CH_4 \leftrightarrows 2H_2 + 2CO$$

$$(d)\ C_{(s)} \leftrightarrows [C]$$

$$(e)\ 3Fe + [C] \leftrightarrows Fe_3C$$

where [C] represents carbon dissolved in solid solution with iron.

$$(f)\ 3Fe_2O_3 + CO_{(g)} \leftrightarrows 2Fe_3O_4 + CO_{2(g)}, \qquad T = 400 - 700\ ^\circ C$$

$$(g)\ 2Fe_3O_4 + 2CO_{(g)} \leftrightarrows 6\,FeO + 2\,CO_{2(g)}, \qquad T = 700 - 900\ ^\circ C$$

$$(h)\ FeO + CO_{(g)} \leftrightarrows Fe + CO_{2(g)}, \qquad T = 850 - 1000\ ^\circ C$$

$$(i)\ 3Fe_2O_3 + H_{2(g)} \leftrightarrows 2Fe_3O_4 + H_2O_{(g)}, \qquad T = 400 - 700\ ^\circ C$$

$$(j)\ 2Fe_3O_4 + 2\,H_{2(g)} \leftrightarrows 6FeO + 2\,H_2O_{(g)}, \qquad T = 700 - 900\ ^\circ C$$

$$(k)\ 6FeO + 6\,H_{2(g)} \leftrightarrows 6Fe + 6\,H_2O_{(g)}, \qquad T = 850 - 1000\ ^\circ C$$

DRI production and subsequent melting in the EAF will require the use of low-carbon or renewable hydrogen as a reductant to reduce the $CO_2$ emissions of the combined DRI reactor/EAF below the current emissions typical of this method of producing steel.

The availability of green hydrogen depends on regional resources, which may limit the availability of green hydrogen in industrial amounts to regions rich in sustainable energy, whether it is hydroelectric power, wind power, solar power, tidal power and/or even nuclear power. Unless ways are found to transport green hydrogen efficiently and safely, the use of green hydrogen to mitigate $CO_2$ emissions from industrial activities, in particular steelmaking, will remain limited to such regions.

One of the more promising methods for transporting hydrogen efficiently and safely around the world is in the form of ammonia, which is made of three hydrogen atoms chemically bound to one nitrogen atom. Ammonia made from blue hydrogen is herein also referred to as blue ammonia, ammonia from green hydrogen as green ammonia.

The hydrogen, which may be blue or green hydrogen, can then be recovered by cracking the ammonia, in particular blue or green ammonia, provided due care is taken to keep the carbon footprint of the methods/means of transportation used for transporting the ammonia to the user region and the energy used for the endothermic ammonia cracking/dissociation reaction as low as possible.

[Fig.1] is a schematic representation of an embodiment of the direct iron-ore reduction process according to the current invention.

Gas feed stream **24** contains ammonia **19** in a proportion of stream **24** of more than 0%vol and upto 100%vol (ammonia only), preferably between 50%vol and 100%vol.

Gas feed stream **24** may further comprise a hydrocarbon-containing gas **20,** such as, for example, natural gas or coke oven gas or a mixture thereof. The proportion of each of natural gas and coke oven gas in hydrocarbon-containing gas **20** can be between 0 and 100%vol. The proportion of hydrocarbon-containing gas **20** in stream **24** can vary between 0%vol and 50%vol. Gas feed stream **24** may also contain additional gaseous hydrogen **21** (such as grey $H_2$, preferably blue $H_2$ and more preferably green $H_2$) in particular in a proportion of between 0%vol and 50%vol of stream **24.** Gas feed stream **24** may also contain additional steam **22.** Such additional steam may be added so as to provide a suitable amount of hydrogen atoms in stream **24** for reforming stream **24,** including any gaseous hydrocarbon-containing gas **20** (such as natural gas and/or coke-oven gas) contained therein. Gas feed stream **24** may also contain reformed gas **23** in proportion of stream **24** that can vary between 0%vol and 50%vol. Gas feed stream **24** may also contain any other gas that can be advantageously added to gas feed stream 24 in order to improve the efficiency of reducing-gas production in gas reformer **25** or in order to adjust the composition of the thus produced reducing gas.

It will be appreciated that the sum of the proportions of the components of gas feed stream 24 amounts to exactly 100%vol of gas feed stream 24 and that the sum of the proportions of any compounds of gas feed stream 24 other than ammonia amounts to less than 100%vol, the remainder (to form 100%vol in total) being ammonia.

In gas reformer **25,** the ammonia of gas stream **24,** undergoes dissociation reaction (m):

$$(m)\, NH_3 \leftrightharpoons \frac{3}{2} H_2 + \frac{1}{2} N_2$$

When gas stream **24** contains hydrocarbons, such as methane, said hydrocarbons react chemically in gas reformer **25,** which may be a steam reformer or a dry reformer (see reactions (a) and (c)).

$$(a)\, CH_4 + H_2O \leftrightharpoons CO + 3H_2$$

$$(b)\, CH_4 \leftrightharpoons C_{(s)} + 2H_2$$

$$(c)\, CO_2 + CH_4 \leftrightharpoons 2H_2 + 2CO$$

$$(d)\, C_{(s)} \leftrightharpoons [C]$$

$$(e)\, 3Fe + [C] \leftrightharpoons Fe_3C$$

A catalyst may be used in gas reformer **25** to increase the kinetics of the reaction(s). In particular, nickel- or nickel-alloy-based catalysts can be present in gas reformer **25** to increase the reaction rate of reactions ((m) and/or (a) and/or (c)). Furthermore, the metallic iron produced in DRI reactor **1** may be useful as a catalyst for dissociation reaction (m), but also reactions (a) and/or (c).

The reducing gas **25a, 25b** generated in gas reformer **25** is supplied to DRI reactor **1.**

DRI reactor **1** is further charged with iron ore **2.**

In the illustrated embodiment, DRI reactor **1** is a moving bed reactor, whereby the iron ore **2** is fed to DRI reactor **1** at the top of the reactor and then travels downwards inside DRI reactor **1.**

Inside DRI reactor **1,** iron ore **2** contacts reducing gas **3a.** As a consequence, a mixture of unreduced iron ore, partially reduced iron ore and metallic iron (DRI) is obtained.

The reactions that take place when reducing gas **3a** contacts iron ore **2** are, depending on the composition of the reducing gas stream **25c** fed to DRI reactor **1,** described in reactions (f - h) and (i - k).

$$(f)\, 3Fe_2O_3 + CO_{(g)} \leftrightharpoons 2Fe_3O_4 + CO_{2(g)}, \qquad T = 400 - 700\,°C$$

$$(g)\, 2Fe_3O_4 + 2CO_{(g)} \leftrightharpoons 6\,FeO + 2\,CO_{2(g)}, \qquad T = 700 - 900\,°C$$

$$(h)\ 6\,FeO + 6CO_{(g)} \leftrightharpoons 6\,Fe + 6\,CO_{2(g)}, \qquad T = 850 - 1000\,°C$$

$$(i)\ 3Fe_2O_3 + H_{2(g)} \leftrightharpoons 2Fe_3O_4 + H_2O_{(g)}, \qquad T = 400 - 700\,°C$$

$$(j)\ 2Fe_3O_4 + 2\,H_{2(g)} \leftrightharpoons 6FeO + 2\,H_2O_{(g)}, \qquad T = 700 - 900\,°C$$

$$(k)\ 6FeO + 6\,H_{2(g)} \leftrightharpoons 6Fe + 6\,H_2O_{(g)}, \qquad T = 850 - 1000\,°C$$

DRI reactor **1** may be equipped with heating means (not shown) in order to maintain iron ore **2** and reducing gas **3a** within a temperature range suitable for the direct-ore-reduction reactions.

A top gas **5** leaves the top of DRI reactor **1** at a temperature between 100°C and 600°C, preferably between 250°C and 500°C and more preferably between 300°C and 450°C.

Top gas **5** may be dedusted in a dust catcher and/or scrubber **6.** According to an advantageous embodiment illustrated in [Fig.1], the optionally dedusted top gas **6a** then travels to a heat recovery system **7** where the temperature of the top gas is reduced in a controlled manner to a temperature between 25°C and 100°C but preferably between 25°C and 40°C. The energy recovered in the heat recovery system **7** can be used for any of a variety of purposes, for example, without limitation, for making steam or for preheating air and/or fuels that may be used in gas reformer **25.** The cooled top gas **7a** is optionally dewatered to produce dewatered and cooled gas stream **8a.**

Cooled and dewatered top gas stream **8a** is split into stream **11** and stream **9a.**

The flow rate of stream **11** can be between 0 and 100%vol of stream **8a,** but is preferably between 20%vol and 90%vol of stream **8a** and more preferably between 30%vol and 80%vol of stream **8a.** Combustible gas, such as natural gas **8b** and/or even ammonia **8c** may be added to stream **11** as needed to modify the heating value of stream **11.** Stream **11** is burned in one or multiple combustion chambers represented in the figure by **11a, 11b, 11c** of gas reformer **25** to provide heat to gas reformer **25** and thus also to the chemical reaction(s) taking place therein. An alternative, combustible gas that does not contain a fraction of top gas from DRI reactor **1** may be used to heat gas reformer **25.** An optional heat exchanger **12** may be used to preheat stream **11** upstream of gas reformer **25.** In the illustrated embodiment, the flue gases **13a, 13b** and **13c** exiting combustion chambers **11a, 11b** and **11c,** are passed through optional heat exchanger **12** to preheat stream **11** and to produce a cooler flue gas stream **13** before the latter flows to stack **14** from where it exits into the atmosphere **15.** If natural gas, coke oven gas or any other gaseous hydrocarbon are used as a part of mixture **11,** the flue gases **13** will contain $CO_2$, which should preferably be extracted from stream **13** before its release into the atmosphere **15** (extraction not shown).

In the illustrated embodiment, the other part of cooled and dewatered top gas stream **8a,** is compressed in compressor **9** to produce compressed stream **9a.**

Stream **9a** needs to be at pressures between 2 and 10 Bar (i.e. between 200 and 1000 kPa), preferably between 4 and 8 Bar (i.e. between 400 and 800 kPa) in order to separate $CO_2$ from stream **9a** using a vacuum pressure swing adsorption (VPSA) machine or a pressure swing adsorption (PSA) machine to produce a $CO_2$-lean stream **10a.** A further option is to separate $CO_2$ from stream **9a** using a chemical absorption unit to produce a $CO_2$-lean stream **10a,** for example through the use of amines. $CO_2$ can also be separated from stream **9a** by means of polymeric membranes or through cryogenic separation.

A $CO_2$-separation step **10** may also be omitted or the amount of $CO_2$ removed from stream **9a** in step **10** may be limited because $CO_2$ advantageously contributes to the production of reducing gas in gas reformer **25,** and participates in the reaction (c). In that case, due care will be taken to avoid or limit reaction (b).

DRI reactor **1** advantageously operates at pressures between 100 and 400 kPa gauge, more preferably between 100 and 200 kPa gauge.

In the illustrated embodiment, stream **10a** is added to ammonia-containing gas feed stream **24.** Natural gas, coke oven gas, another hydrocarbon-containing gas or a mixture thereof **20** may also be part of stream **24,** typically in an amount of from 0%vol to 50%vol of stream **24.** Hydrogen (grey $H_2$, preferably blue $H_2$ and more preferably green $H_2$) **21** can also be included in stream **24** in a proportion of between 0%vol and 50%vol of stream **24.** Additional steam **22** may be added to stream **24** if needed, in particular to assist in hydrocarbon reforming in gas reformer **25.**

Reformed gas **23** may also be included in stream **24** in a proportion of between 0% and 50% of stream **24.**

Stream **24,** optionally with addition of stream **10a,** is supplied to gas reformer **25,** in multiple substreams **24a** to produce a reducing gas in gas reformer **25** by taking advantage of reaction (1) and optionally, depending on the composition of said substreams, one or more of reactions (a) and (c).

The resulting reducing gas **25a** and **25b** is suitable for reducing iron ore in DRI reactor **1.**

According to a particularly advantageous and distinguishing embodiment of the present invention, the ammonia **19** of stream **24** is green (or low carbon) ammonia **19,** thus imparting significant reductions in $CO_2$ emissions/carbon footprint compared to conventional hydrocarbon-based DRI operation.

Stream **24** is optionally preheated in heat exchanger **12** to produce preheated gas streams **24a.** Such preheating advantageously makes use of excess heat leaving the combustion chambers of gas reformer **25,** thus reducing the additional energy required for heating gas reformer **25.**

Optionally preheated gas mixture **24a** is reformed in gas reformer **25** which utilises catalysts to reform gas streams **24a** according to reactions (1), (a) and (c) into reducing gas **25a** and **25b** suitable for reducing iron ore **2** in DRI reactor **1.**

Reducing gas **25a** and **25b** is optionally mixed with additional gaseous hydrocarbons **23b** and/or oxygen **23a** upstream of DRI reactor **1** to further adjust the temperature and composition of final reducing gas **25c** before its introduction into the bustle pipe **3** of DRI reactor **1.** The temperature at which mixture 25c is introduced into DRI reactor **1** can be between 600°C and 1100°C, preferably between 750°C and 1100°C and more preferably between 950°C and 1050°C. This is desirable to increase the kinetics of the reduction reaction inside the DRI reactor **1.** Bustle pipe **3** serves as a manifold to distribute the final reducing gas **25c** evenly around the circumference of DRI reactor **1.**

At the bottom of DRI reactor **1,** the mixture **4** of unreduced, partially reduced and fully reduced iron ore from the upper part of DRI reactor **1** has been substantially transformed into hot metallic DRI **26a** where all of the iron ore has been substantially reduced after reactions (f) - (k) have been substantially completed. Between 85% and 99%, preferably between 90% and 97% and more preferably between 94% and 97% of the iron content in DRI **26a** is metallic iron with the remaining iron being in the form of non-metallic iron oxide ($Fe_xO_y$).

Even though in principle desirable, it is in reality generally impractical to react the iron ore completely to achieve 100% of the iron contained therein as metallic iron, as such an achievement would significantly reduce the productivity of the DRI process and significantly increase the reducing gas consumption of the process. Therefore, a compromise is to be made as regards the degree of iron ore reduction.

Hot DRI **26a** enters the conical cooling zone **26** where it is cooled with cooling gas **27** to a temperature depending on the immediate use of the DRI after its evacuation from DRI reactor **1.** If the DRI **30** is to be charged immediately to an adjacent EAF (not shown) at a temperature ranging between 400°C and 800°C, more preferably between 600°C and 800°C, it is advantageous to limit the cooling to that necessary for safe transport of DRI **30** to the EAF while taking advantage of the sensible heat already present in the hot DRI. Alternatively, the hot DRI can be subjected to limited cooling before being formed into briquettes (HBI). Such briquetting renders the DRI more suitable for storage and/or transportation to a (EAF) site located further from DRI reactor **1.**

Cooling gas **27** can be substantially inert so as not to react with hot DRI **26a.** Cooling gas **27** can also be or contain a gas that imparts desired properties to the DRI while it cools. An example of such a gas is natural gas which can crack in accordance with reaction (b) to deposit carbon into the DRI where it dissolves in the iron as a solid solution. As mentioned above, carbon imparts operational and energy saving benefits to the EAF process during melting of the DRI. Cooling gas **27** can also include a portion of top gas **5.**

At the top of the cooling zone **26** of DRI reactor **1,** the cooling gas **27** is extracted from the cooling zone **26** as spent cooling gas stream **28,** whereafter stream **28** is cooled before being fortified with makeup cooling gas and compressed for reinjection at the bottom of the cooling zone **26.**

The DRI **30** is extracted at the bottom of the conical cooling zone **26** at a temperature most appropriate for its subsequent use.

Advantages and distinguishing features of the invention include:

1. Blue or green Ammonia can be used to partially or fully replace carbon-bearing hydrocarbons, thus lowering the $CO_2$ emissions of the DRI reactor and the iron- and steelmaking plant.
2. Blue or green Ammonia partially or fully replaces blue or green hydrogen as a method of producing low-emission DRI.
3. Compared to (blue/green) hydrogen, (blue/green) Ammonia can more easily be stored and shipped around the world to regions that do not have the/ sufficient natural resources to produce green hydrogen.

The extremely low temperatures (-253°C) of liquid hydrogen required for shipping makes liquid hydrogen very costly to prepare and store during long voyages. Liquid ammonia boils at (-33°C). The higher transport and storage temperatures of the liquid ammonia makes it less costly to ship. Moreover, existing infrastructure at world-scale makes $NH_3$ more readily available compared to liquid hydrogen.

1. Ammonia can be mixed with gaseous hydrocarbons such as natural gas, coke oven gas, steam and syngas in proportions of up 90 %vol ammonia while still producing DRI that advantageously contains a desired and controllable

amount of dissolved carbon (in solid solution) and/or iron carbide ($Fe_3C$) through reaction (e). The desired carbon content of the DRI depends on the final use of the DRI.

2. The DRI reactor can advantageously be operated while being 100% free of direct $CO_2$ emissions by replacing the conventional gaseous components (hydrocarbons, natural gas, coke oven gas, and other carbon-containing gases) in the reforming process with 100% ammonia dissociation products.

3. Hydrogen is a light gas that can carry/transport only a limited amount of heat/ thermal energy per unit of volume ($Nm^3$). Hydrogen is therefore not effective as a heat-transfer medium for the transfer of heat to the mixture of unreduced iron ore, reduced iron ore or fully reduced ore **4.** Therefore, the supply of 100% hydrogen as a reducing gas to the DRI reactor will result in low top gas temperatures approaching 100°C. Since DRI top gas contains a lot of water vapour, there is a danger that condensation of such moisture can occur. Conventional DRI operations exhibit top gas temperatures in the range of 300 - 600°C.

When ammonia is dissociated in the gas reformer, a mixture of hydrogen and nitrogen produced is obtained. Compared to hydrogen, nitrogen can carry/transport a significantly larger amount of heat/thermal energy per unit of volume ($Nm^3$). The mixture of hydrogen and nitrogen (and optionally other ingredients) supplied as reducing gas to the DRI reactor can thus be used as an effective heat transfer medium for the supply of thermal energy to the DRI reactor, so that the above-described problems can be readily avoided.

Notes:

Unless otherwise indicated, percentages of a compound in a gas stream are percentages by volume (%vol).
Distinction is made between continuously operated DRI reactors/processes and batch DRI reactors/processes.
Gas streams injected in the continuously operated DRI reactor are generally injected continuously during operation of the DRI reactor.

Embodiments of the Method according to the invention

The invention includes a method of producing Direct Reduced Iron (DRI) in a, preferably continuous, DRI reactor using hydrogen ($H_2$) as a reducing gas to reduce iron oxides contained in iron ore, method whereby at least part of the hydrogen is produced by dissociation of ammonia ($NH_3$) into nitrogen ($N_2$) and hydrogen ($H_2$) (reaction (1)) in a gas reformer.
Continuous DRI reactors suitable for use in the method are known in the art.
An ammonia-containing stream is thus subjected to dissociation reaction (1) upstream of the DRI reactor and the hydrogen- and nitrogen-containing dissociation product stream is injected into the DRI reactor, where the hydrogen produced by the dissociation reaction is used as a reducing agent for the reduction of iron oxides in the iron ore inside the DRI reactor.
The dissociation reaction (1), to which the ammonia-containing stream is subjected upstream of the DRI reactor, may be non-catalytic or catalytic.
Thermal energy for the reaction may be provided by combustion, for example in a fired heater as described above.
The temperature of the dissociation product (reducing gas) stream may be adjusted upstream of the DRI reactor by injecting fuel and/or oxidant into the stream upstream of the DRI reactor.
Hydrogen other than the hydrogen generated by ammonia dissociation may also be injected into the DRI reactor as reducing gas for the reduction of iron oxides in the iron ore
Hydrogen not generated by ammonia dissociation may be injected into the DRI reactor separately from the above-mentioned dissociation product stream. Hydrogen not generated by ammonia dissociation may also be mixed with the ammonia-containing stream and/or with the dissociation product stream.
This supplementary hydrogen preferably has a low carbon footprint, for example hydrogen produced by electrolysis with electricity from renewable energy sources.
Another useful source of supplementary hydrogen is coke oven gas.
A further source of supplementary hydrogen is syngas.
The latter two gases also contain CO, which is also useful as a reducing agent for the reduction of iron oxides.
According to an embodiment of the method, CO is used in the DRI reactor as a further reducing agent in addition to the $H_2$ generated by the dissociation of ammonia as described above.
Said CO may be injected into the DRI reactor separately from the dissociation-product stream and/or mixed with the dissociation-product stream.
Useful sources of CO are coke oven gas, syngas and recycled top gas from the DRI reactor.
CO-containing gas, such as coke oven gas and/or syngas may thus be mixed with the dissociation-product

stream.

Preferably, syngas, which comprises a mixture of CO and $H_2$, is generated.

CO-containing syngas is preferably generated by dry reforming or steam reforming of hydrocarbons, in particular gaseous hydrocarbons such as $CH_4$/natural gas, preferably by catalytic dry reforming or catalytic steam reforming. Syngas can also be formed by partial oxidation of hydrocarbon gases, preferably with oxygen as the combustion oxidant.

The syngas may be produced separately from the ammonia dissociation, and the produced syngas may be mixed with the dissociation-product stream.

Gaseous hydrocarbons may also be injected into the gas reformer, typically together with steam and/or $CO_2$, and undergo reforming into syngas together with the ammonia dissociation inside the gas reformer.

The gaseous hydrocarbons, in particular $CH_4$/natural gas, may be supplied to the gas reformer separately or admixed to the ammonia-containing stream.

In the method, top gas generated by the DRI reactor, which contains $H_2$ and, in certain embodiments, a significant level of CO, can be used as additional/supplementary reducing gas for the reduction of iron oxide inside the DRI reactor.

$H_2$, and optionally CO, present in the top gas may be used as fuel, in particular to heat the gas reformer and/or to preheat gas supplied to the gas reformer and/or to preheat reducing gas before it is introduced into the DRI reactor.

In the context of the present invention, the expression "top gas" refers to the spent reducing gas which is evacuated from the DRI reactor after having been used for the direct reduction of iron ore in said reactor.

$H_2$, and optionally CO, present in the top gas is recycled as reducing gas to the DRI reactor, for example by mixing said $H_2$ and optional CO with the ammonia-containing stream to the gas reformer or with the dissociation-product stream upstream of the DRI reactor.

In order to increase the concentration of $H_2$, and optional CO, water is removed from the top gas, typically by condensation, before the top gas is used as fuel and/or recycled as reducing gas.

Similarly, When the top gas contains significant amounts of $CO_2$, $CO_2$ may also be removed from the top gas before the top gas is used as fuel and/or recycled as reducing gas, in particular before the top gas is recycled as reducing gas.

The iron ore may in particular be supplied to the DRI reactor in the form of lumps and/or pellets.

The produced DRI may be subjected to briquetting.

The produced DRI, whether briquetted or not, is typically used in the production of steel.

## Claims

**1.** Direct iron-ore reduction process comprising the steps of:

- supplying a gas feed (24a) to a gas reformer (25),
- reforming the gas feed (24a) in the gas reformer (25) so as to obtain a hydrogen-containing reducing gas (25a, 25b),
- evacuating the reducing gas (25a, 25b) from the gas reformer (25),
- supplying iron ore (2) to a direct-reduction reactor (1),
- supplying at least part of the reducing gas (25a, 25b) to the direct-reduction reactor (1),
- subjecting the iron ore (2) to direct reduction with the reducing gas (25a, 25b) in the direct-reduction reactor (1) so as to obtain direct reduced iron (30),
- evacuating the direct reduced iron (30) from the direct-reduction reactor (1),
- evacuating top gas (5) from the direct-reduction reactor (1),

**characterised in that**:

- the gas feed to the gas reformer (25) contains $NH_3$,
- in the gas reformer (25), the $NH_3$ in the gas feed (24a) is subjected to dissociation reaction (1)

$$2\ NH_3 \rightarrow N_2 + 3H_2 \qquad (1),$$

- $H_2$, and optionally CO, present in the top gas (5) is recycled as reducing gas to the direct-reduction reactor (1) by mixing said $H_2$, and optionally CO, with an ammonia-containing stream in the gas feed to the gas reformer (25) or with the reducing gas (25a, 25b) upstream of the direct-reduction reactor (1).

**2.** Direct iron-ore reduction process according to claim 1, whereby the direct-reduction reactor (1) is a continuous direct-reduction reactor.

3. Direct iron-ore reduction process according to claim 1 or 2, whereby the gas reformer (25) is a catalytic reformer.

4. Direct iron-ore reduction process according to claim 3, whereby the gas reformer (25) comprises a nickel- or nickel-alloy-containing catalyst.

5. Direct iron-ore reduction process according to claims 1 or 2 where the reforming process is accomplished through partial oxidation.

6. Direct iron-ore reduction process according to any one of the preceding claims, whereby the gas feed (24a) to the gas reformer (25) comprises at least one hydrocarbon (20).

7. Direct iron-ore reduction process according to claim 6, whereby the gas feed (24a) to the gas reformer (25) comprises a hydrocarbon (20) selected from the group consisting of gaseous hydrocarbons, in particular gaseous hydrocarbons selected from the group consisting of methane, ethane, propane, butane and pentane, or a combination of two or more of said hydrocarbons, preferably natural gas.

8. Direct iron-ore reduction process according to claim 6 or 7, whereby the gas feed (24a) to the gas reformer (25) further includes steam.

9. Direct iron-ore reduction process according to any one of claims 6 to 8, whereby the gas feed (24a) to the gas reformer (25) comprises $CO_2$.

10. Direct iron-ore reduction process according to any one of the preceding claims, whereby the reducing gas (25a, 25b) evacuated from the gas reformer (25) is heated before being supplied to the direct-reduction reactor (1).

11. Direct iron-ore reduction process according to any one of the preceding claims, whereby the reducing gas (25a, 25b) is supplied to the direct-reduction reactor (1) at a temperature between 600°C and 1100°C, preferably between 750°C and 1100°C and more preferably between 950°C and 1050°C.

12. Direct iron-ore reduction process according to any one of the preceding claims, whereby a fraction of the top gas (5) from the direct reduction reactor (1) is used as fuel for heating the gas reformer (25).

13. Direct iron-ore reduction process according to any one of the preceding claims, whereby the direct-reduction reactor (1) is a shaft furnace, preferably selected from the group consisting of moving-bed shaft furnaces and fluidized-bed shaft furnaces, more preferably countercurrent moving-bed shaft furnaces.

14. Direct iron-ore reduction process according to any one of the preceding claims, whereby the direct-reduced iron is briquetted after having been removed from the direct-reduction reactor (1).

15. Process for the production of steel, whereby direct-reduced iron (30) is produced by means of the direct iron-ore reduction process according to any one of claims 1 to 13 and whereby steel is produced from said direct-reduced iron (30) in an electric arc furnace, optionally after the direct-reduced iron has been briquetted.

## Patentansprüche

1. Direktreduktionsverfahren für Eisenerz, umfassend die Schritte:

   • Zuführen eines Gasstroms (24a) zu einem Gasreformer (25),
   • Reformieren des Gasstroms (24a) in dem Gasreformer (25), um ein wasserstoffhaltiges Reduktionsgas (25a, 25b) zu erhalten,
   • Abführen des Reduktionsgases (25a, 25b) aus dem Gasreformer (25),
   • Zuführen von Eisenerz (2) zu einem Direktreduktionsreaktor (1),
   • Zuführen zumindest eines Teils des Reduktionsgases (25a, 25b) zu dem Direktreduktionsreaktor (1),
   • Unterwerfen des Eisenerzes (2) einer Direktreduktion mit dem Reduktionsgas (25a, 25b) in dem Direktreduktionsreaktor (1), um direktreduziertes Eisen (30) zu erhalten,
   • Abführen des direktreduzierten Eisens (30) aus dem Direktreduktionsreaktor (1),
   • Abführen von Gichtgas (5) aus dem Direktreduktionsreaktor (1),

**gekennzeichnet dadurch, dass**:

- der Gasstrom zum Gasreformer (25) $NH_3$ enthält,
- in dem Gasreformer (25), das $NH_3$ im Gasstrom (24a) einer Dissoziationsreaktion (1) unterzogen wird

$$2\ NH_3 \rightarrow N_2 + 3H_2 \qquad (1),$$

- $H_2$, und optional CO, die im Gichtgas (5) vorhanden sind, als Reduktionsgas zum Direktreduktionsreaktor (1) recycelt werden, indem besagtes $H_2$, und optional CO, mit einem ammoniakhaltigen Strom im Gasstrom zum Gasreformer (25) oder mit dem Reduktionsgas (25a, 25b) stromaufwärts des Direktreduktionsreaktors (1) gemischt werden.

**2.** Direktreduktionsverfahren für Eisenerz nach Anspruch 1, wobei der Direktreduktionsreaktor (1) ein kontinuierlicher Direktreduktionsreaktor ist.

**3.** Direktreduktionsverfahren für Eisenerz nach Anspruch 1 oder 2, wobei der Gasreformer (25) ein katalytischer Reformer ist.

**4.** Direktreduktionsverfahren für Eisenerz nach Anspruch 3, wobei der Gasreformer (25) einen nickel- oder nickellegierungshaltigen Katalysator enthält.

**5.** Direktreduktionsverfahren für Eisenerz nach Anspruch 1 oder 2, wobei der Reformierungsprozess durch partielle Oxidation erreicht wird.

**6.** Direktreduktionsverfahren für Eisenerz nach einem der vorhergehenden Ansprüche, wobei der Gasstrom (24a) zum Gasreformer (25) mindestens einen Kohlenwasserstoff (20) enthält.

**7.** Direktreduktionsverfahren für Eisenerz nach Anspruch 6, wobei der Gasstrom (24a) zum Gasreformer (25) einen Kohlenwasserstoff (20) enthält, der aus der Gruppe bestehend aus gasförmigen Kohlenwasserstoffen, insbesondere gasförmigen Kohlenwasserstoffen, ausgewählt aus der Gruppe bestehend aus Methan, Ethan, Propan, Butan und Pentan, oder einer Kombination von zwei oder mehr der genannten Kohlenwasserstoffe, vorzugsweise Erdgas, ausgewählt ist.

**8.** Direktreduktionsverfahren für Eisenerz nach Anspruch 6 oder 7, wobei der Gasstrom (24a) zum Gasreformer (25) ferner Dampf einschließt.

**9.** Direktreduktionsverfahren für Eisenerz nach einem der Ansprüche 6 bis 8, wobei der Gasstrom (24a) zum Gasreformer (25) $CO_2$ enthält.

**10.** Direktreduktionsverfahren für Eisenerz nach einem der vorhergehenden Ansprüche, wobei das aus dem Gasreformer (25) abgeführte Reduktionsgas (25a, 25b) erwärmt wird, bevor es dem Direktreduktionsreaktor (1) zugeführt wird.

**11.** Direktreduktionsverfahren für Eisenerz nach einem der vorhergehenden Ansprüche, wobei das Reduktionsgas (25a, 25b) dem Direktreduktionsreaktor (1) bei einer Temperatur zwischen 600°C und 1100°C, vorzugsweise zwischen 750°C und 1100°C und stärker bevorzugt zwischen 950°C und 1050°C, zugeführt wird.

**12.** Direktreduktionsverfahren für Eisenerz nach einem der vorhergehenden Ansprüche, wobei ein Anteil des Gichtgases (5) aus dem Direktreduktionsreaktor (1) als Brennstoff zum Erwärmen des Gasreformers (25) verwendet wird.

**13.** Direktreduktionsverfahren für Eisenerz nach einem der vorhergehenden Ansprüche, wobei der Direktreduktionsreaktor (1) ein Schachtofen ist, vorzugsweise ausgewählt aus der Gruppe bestehend aus Wanderbettschachtöfen und Wirbelschichtschachtöfen, stärker bevorzugt Gegenstrom-Wanderbettschachtöfen.

**14.** Direktreduktionsverfahren für Eisenerz nach einem der vorhergehenden Ansprüche, wobei das direktreduzierte Eisen nach der Entnahme aus dem Direktreduktionsreaktor (1) brikettiert wird.

**15.** Verfahren zur Stahlherstellung, wobei direktreduziertes Eisen (30) mittels des Direktreduktionsverfahrens für

Eisenerz nach einem der Ansprüche 1 bis 13 hergestellt wird und wobei Stahl aus dem direktreduzierten Eisen (30) in einem Elektrolichtbogenofen hergestellt wird, optional nachdem das direktreduzierte Eisen brikettiert wurde.

## Revendications

**1.** Procédé de réduction directe de minerai de fer comprenant les étapes de:

- fourniture d'une alimentation en gaz (24a) à un réformeur de gaz (25),
- reformage de l'alimentation en gaz (24a) dans le réformeur de gaz (25) de manière à obtenir un gaz réducteur contenant de l'hydrogène (25a, 25b),
- évacuation du gaz réducteur (25a, 25b) du réformeur de gaz (25),
- fourniture de minerai de fer (2) à un réacteur de réduction directe (1),
- fourniture d'au moins une partie du gaz réducteur (25a, 25b) au réacteur de réduction directe (1),
- soumission du minerai de fer (2) à une réduction directe avec le gaz réducteur (25a, 25b) dans le réacteur de réduction directe (1) de manière à obtenir du fer directement réduit (30),
- évacuation du fer directement réduit (30) du réacteur de réduction directe (1),
- évacuation du gaz de tête (5) du réacteur de réduction directe (1),

**caractérisé en ce que**:

- l'alimentation en gaz du réformeur de gaz (25) contient du NH3,
- dans le réformeur de gaz (25), le NH3 de l'alimentation en gaz (24a) est soumis à la réaction de dissociation (1)

$$2\ NH3 \rightarrow N2 + 3H2 \qquad (1),$$

- H2, et optionnellement du CO, présents dans le gaz de tête (5) sont recyclés comme gaz réducteur vers le réacteur de réduction directe (1) en mélangeant ledit H2, et optionnellement le CO, avec un courant contenant de l'ammoniac dans l'alimentation en gaz du réformeur de gaz (25) ou avec le gaz réducteur (25a, 25b) en amont du réacteur de réduction directe (1).

**2.** Procédé de réduction directe de minerai de fer selon la revendication 1, dans lequel le réacteur de réduction directe (1) est un réacteur de réduction directe continu.

**3.** Procédé de réduction directe de minerai de fer selon la revendication 1 ou 2, dans lequel le réformeur de gaz (25) est un réformeur catalytique.

**4.** Procédé de réduction directe de minerai de fer selon la revendication 3, dans lequel le réformeur de gaz (25) comprend un catalyseur contenant du nickel ou un alliage de nickel.

**5.** Procédé de réduction directe de minerai de fer selon les revendications 1 ou 2, dans lequel le processus de reformage est accompli par oxydation partielle.

**6.** Procédé de réduction directe de minerai de fer selon l'une quelconque des revendications précédentes, dans lequel l'alimentation en gaz (24a) du réformeur de gaz (25) comprend au moins un hydrocarbure (20).

**7.** Procédé de réduction directe de minerai de fer selon la revendication 6, dans lequel l'alimentation en gaz (24a) du réformeur de gaz (25) comprend un hydrocarbure (20) choisi dans le groupe constitué par les hydrocarbures gazeux, en particulier les hydrocarbures gazeux choisis dans le groupe constitué par le méthane, l'éthane, le propane, le butane et le pentane, ou une combinaison d'au moins deux desdits hydrocarbures, de préférence du gaz naturel.

**8.** Procédé de réduction directe de minerai de fer selon la revendication 6 ou 7, dans lequel l'alimentation en gaz (24a) du réformeur de gaz (25) comprend en outre de la vapeur.

**9.** Procédé de réduction directe de minerai de fer selon l'une quelconque des revendications 6 à 8, dans lequel l'alimentation en gaz (24a) du réformeur de gaz (25) comprend du CO2.

**10.** Procédé de réduction directe de minerai de fer selon l'une quelconque des revendications précédentes, dans lequel le

gaz réducteur (25a, 25b) évacué du réformeur de gaz (25) est chauffé avant d'être fourni au réacteur de réduction directe (1).

**11.** Procédé de réduction directe de minerai de fer selon l'une quelconque des revendications précédentes, dans lequel le gaz réducteur (25a, 25b) est fourni au réacteur de réduction directe (1) à une température comprise entre 600°C et 1100°C, de préférence entre 750°C et 1100°C et plus préférablement entre 950°C et 1050°C.

**12.** Procédé de réduction directe de minerai de fer selon l'une quelconque des revendications précédentes, dans lequel une fraction du gaz de tête (5) provenant du réacteur de réduction directe (1) est utilisée comme combustible pour chauffer le réformeur de gaz (25).

**13.** Procédé de réduction directe de minerai de fer selon l'une quelconque des revendications précédentes, dans lequel le réacteur de réduction directe (1) est un four à cuve, de préférence choisi dans le groupe constitué par les fours à cuve à lit mobile et les fours à cuve à lit fluidisé, plus préférablement les fours à cuve à lit mobile à contre-courant.

**14.** Procédé de réduction directe de minerai de fer selon l'une quelconque des revendications précédentes, dans lequel le fer directement réduit est briquetté après avoir été retiré du réacteur de réduction directe (1).

**15.** Procédé de production d'acier, dans lequel du fer directement réduit (30) est produit au moyen du procédé de réduction directe de minerai de fer selon l'une quelconque des revendications 1 à 13 et dans lequel de l'acier est produit à partir dudit fer directement réduit (30) dans un four à arc électrique, éventuellement après que le fer directement réduit ait été briquetté.

[Fig. 1]

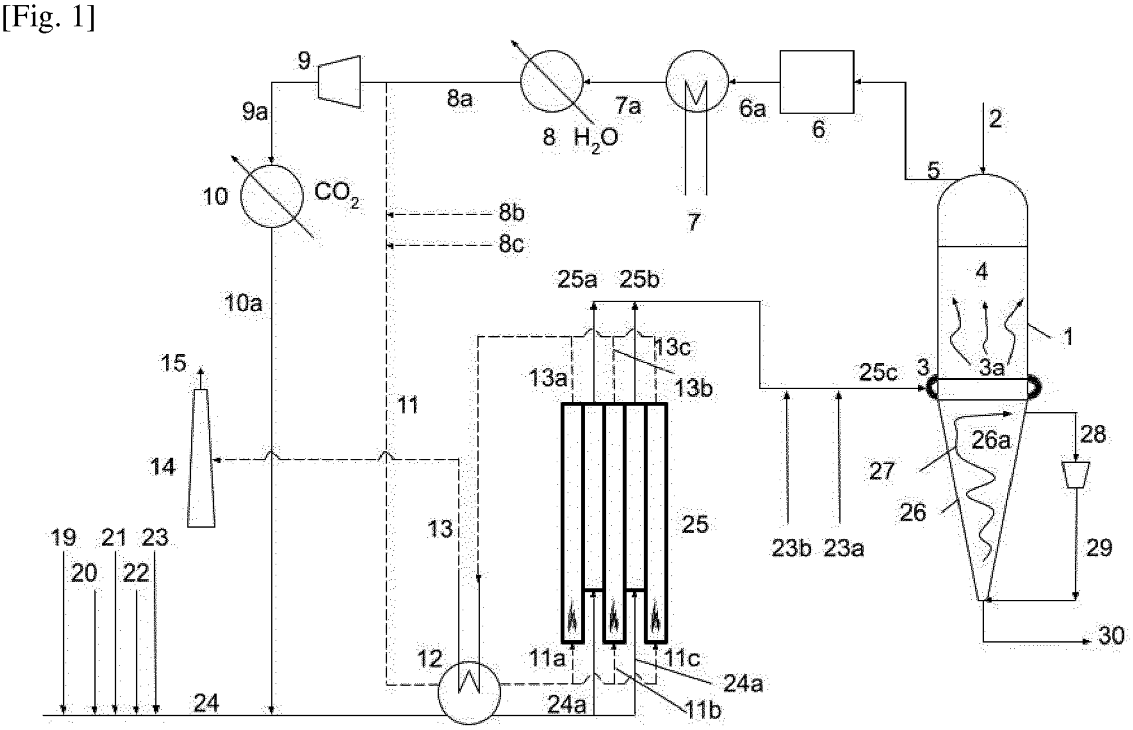
9
8a
7a
6a
6
2
9a
8
H2O
5
7
10
CO2
8b
8c
4
25a
25b
10a
1
13c
15
13a
25c
3
3a
13b
11
28
26a
27
14
25
13
26
19
21
23
23b
23a
29
20
22
12
11a
11c
24a
30
24
24a
11b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000178625 A
- JP 2013216929 A
- CN 112813219 A